# EUROPÄISCHE PATENTSCHRIFT

(11) **EP 0 923 470 B1**
(45) Veröffentlichungstag und Bekanntmachung des Hinweises auf die Patenterteilung: **23.04.2003**
(21) Anmeldenummer: 98936220.7
(22) Anmeldetag: 18.06.1998
(51) Int. Cl.: B60S 1/38, B60S 1/40

(54) **WISCHVORRICHTUNG FÜR WINDSCHUTZSCHEIBEN VON KRAFTFAHRZEUGEN**
WIPER FOR MOTOR VEHICLE WINDSHIELDS
DISPOSITIF D'ESSUIE-GLACE POUR PARE-BRISE DE VEHICULES

(30) Priorität: 11.07.1997 DE 19729865
(43) Veröffentlichungstag der Anmeldung: 23.06.1999
(73) Patentinhaber: ROBERT BOSCH GMBH, 70442 Stuttgart (DE)
(72) Erfinder: KOTLARSKI, Thomas, D-77830 Bühlertal (DE)
(86) Internationale Anmeldenummer: DE9801677
(87) Internationale Veröffentlichungsnummer: WO99002382

(56) Entgegenhaltungen:
- DE-A- 2 847 978
- US-A- 3 845 519
- US-A- 5 065 474

## Beschreibung

### Stand der Technik

Die bei Wischvorrichtungen für Windschutzscheiben von Kraftfahrzeugen in der Praxis seit langem verbreiteten Tragbügelgestell-Wischblätter (DE-PS 15 05 397) weisen eine große Bauhöhe auf, welche bei den vor der Fahrzeugscheibe vorhandenen Strömungsverhältnissen, insbesondere bei höherer Fahrgeschwindigkeit den Abhebebestrebungen des Wischblatts entgegenkommt. Zumindest wird dadurch der vorschriftsmäßige Auflagedruck des Wischblatts an der Scheibe so stark verringert, daß die Wischqualität leidet.

Die Erfindung geht aus von einer Wischvorrichtung nach der Gattung des Anspruchs 1. Bei einem bekannten, zu einer Wischvorrichtung gehörenden Wischblatt (DE-PS 10 28 896) soll das Tragelement für das gesamte vom Wischblatt bestrichene Wischfeld eine möglichst gleichmäßige Verteilung des vom Wischerarm ausgehenden Wischblatt-Anpreßdrucks an der Scheibe gewährleistet. Durch eine entsprechende Krümmung des unbelasteten Tragelements - also wenn das Wischblatt nicht an der Scheibe anliegt - werden die Enden der im Betrieb des Wischblatts vollständig an der Scheibe angelegten Wischleiste durch das dann gespannte Tragelement zur Scheibe belastet, auch wenn sich die Krümmungsradien von sphärisch gekrümmten Fahrzeugscheiben bei jeder Wischblattposition ändern. Die Krümmung des Wischblatts muss also etwas stärker sein als die im Wischfeld der zu wischenden Scheibe gemessene stärkste Krümmung. Das Tragelement ersetzt somit die aufwendige Tragbügelkonstruktion mit zwei in der Wischleiste angeordneten Federschienen, wie sie bei den oben genannten, herkömmlichen Wischblättern praktiziert wird. Dadurch lässt sich die Bauhöhe des Wischblatts zwar verringern, doch genügt die damit erreichbare Verbesserung des Wischqualität bei hohen Fahrgeschwindigkeiten immer noch nicht den großen Anforderungen, die diesbezüglich von manchen Kunden gestellt werden. Als nachteilig hat sich der über dem Wischblatt liegende Wischerarm erwiesen, der die Vorteile des niedrig bauenden Wischblatts abschwächt.

Es sind bereits Wischblätter bekannt (US-A 3,845,519), bei denen der Wischerarm neben dem Wischblatt liegend angeordnet ist. Zur Verbindung mit dem Wischblatt weist der Wischarm einen seitlich vorspringenden Zapfen auf, der komplett in eine Vorrichtungshälfte am Wischblatt eingeschoben und dort arretiert wird. Dadurch entsteht ein langer, einseitig vorstehender Stift, der gegenüber hohen Biegungsmomenten äußerst anfällig ist.

### Vorteile der Erfindung

Bei der erfindungsgemäßen Wischvorrichtung, der der Wischvorrichtung nach der US-A-3 845 519 gattungsgemaß ausgebildet ist, mit den kennzeichnenden Merkmalen des Anspruchs 1 liegt der zur Wischvorrichtung gehörende Wischerarm neben dem Wischblatt, so dass dieser kaum noch einen Einfluss auf die Bauhöhe der Wischvorrichtung und damit auf das Hochgeschwindigkeitsverhalten des arbeitenden Wischblatts nehmen kann. Die Gelenkverbindung ermöglicht dem Wischblatt bzw. Wischleiste eine ordnungsgemäße Anlage an der Scheibenoberfläche in jeder Wischblattposition, auch bei extrem hohen Fahrgeschwindigkeiten.

Die gelenkige Verbindung zwischen Wischerarm und Wischblatt wird auf einfache und betriebssichere Weise dadurch erreicht, dass eine der beiden Vorrichtungshälften einen Gelenkbolzen aufweist und die andere der beiden Vorrichtungshälften mit einer dem Gelenkbolzen zugeordneten Lageraufnahme versehen ist.

In vielen Anwendungsfällen kann es zweckmäßig sein, wenn der Gelenkbolzen am Wischblatt angeordnet ist und sich dessen Lageraufnahme am Wischerarm befindet. Dabei ist die in der Regel preisgünstiger herzustellende Vorrichtungshälfte an dem als Verschleißteil anzusehenden Wischblatt angeordnet. Dessen ungeachtet kann es aus besonderen Gründen jedoch auch vorteilhaft sein, den Gelenkbolzen am Wischerarm und die Lageraufnahme am Wischblatt anzuordnen.

Damit die Verbindung zwischen Wischerarm und Wischblatt insbesondere während des in Richtung der Gelenkachse der Gelenkverbindung erfolgenden Wischbetriebs nicht gelöst werden kann, sind die beiden Vorrichtungshälften mit Mitteln zum axialen Sichern des Gelenkbolzens in seiner Lageraufnahme versehen. Dabei bilden auch die einander zugewandten Innenflächen der U-Schenkel und die diesen zugewandten Seitenflächen der jeweiligen Vorrichtungshälften ausgezeichnete Führungsmittel, welche bei sorgfältiger maßlicher Abstimmung für einen ruhigen Betrieb der Wischvorrichtung sorgen.

Ein stabiler, kompakter Aufbau der den Gelenkbolzen aufweisenden Vorrichtungshälfte ergibt sich dadurch, daß diese einen Grundkörper aufweist, an dessen beiden voneinander abgewandten, quer zur Wischrichtung liegenden Seiten je ein in Wischrichtung vorspringender Zapfen angeordnet ist und die beiden Zapfen eine miteinander fluchtende Längsachse haben. Die beiden Zapfen bilden gewissermaßen die freien Enden eines in den Grundkörper integrierten Gelenkbolzens, dessen im Grundkörper befindlicher Mittelabschnitt keine Gelenkfunktion hat.

Eine besonders niedrig bauende Wischvorrichtung ergibt sich, wenn die die Lageraufnahme aufweisende Vorrichtungshälfte einen U-förmigen Querschnitt hat, deren beide U-Schenkel die beiden mit den Zapfen versehenen Seiten des Grundkörpers übergreifen, wobei in jedem der beiden U-Schenkel eine Lageraufnahme für den an der von ihm übergriffenen Seite des Grundkörpers angeordneten Zapfen angeordnet ist. Dabei bilden die U-Schenkel dieser Vorrichtungshälfte im Zusammenwirken mit den ihnen zugewandten, mit den Zapfen versehenen Seiten des Grundkörpers der anderen Vorrichtungshälfte, eine einfache, betriebssichere Lösesicherung in Wischrichtung für das am Wischerarm angelenkte Wischblatt.

Zum Verbinden der die Lageraufnahme aufweisenden Vorrichtungshälfte mit dem Wischerarm ist der U-Schenkel mit einer Halterung für das freie Ende des Wischerarms versehen.

Zweckmäßig hat die Halterung einen Einsteckkanal für das freie Wischerarmende und ist mit Sicherungsmitteln für das Wischerarmende im Einsteckkanal versehen. Diese Sicherungsmittel können beispielsweise durch eine Rastverbindung oder auch Klemmverbindung realisiert werden. Es ist jedoch aber auch denkbar, das Wischerarmende im Einsteckkanal zu verkleben, zu verschweißen oder auf eine andere Weise zu befestigen. So kann beispielsweise die eine Vorrichtungshälfte auch an das freie Ende des Wischerarms direkt angeformt werden, wenn diese - gemäß einem weiteren Merkmal der Erfindung - aus Kunststoff hergestellt wird.

Eine einfache, praxisnahe und kostengünstige Ausführung der Erfindung ergibt sich, wenn die Halterung für das freie Ende des Wischerarms in Wischrichtung gesehen - je nach Betrachtungsweise - neben bzw. vor oder hinter dem Wischblatt angeordnet ist.

Wenn die die Lageraufnahme aufweisende Vorrichtungshälfte aus Metall hergestellt, vorzugsweise aus einem Blech geformt ist, ist es möglich, daß Wischerarmende in dem Einsteckkanal zu verkrimpen, d.h. den Kanal nach Einführen des Wischerarms spanlos zu verformen, damit ein sicherer Sitz gewährleistet ist.

Zum Befestigen sowohl der Kunststoff- als auch der Metall-Vorrichtungshälfte am freien Ende des Wischerarms mag dieses Ende zumindest eine bestimme Oberflächenrauhigkeit aufweisen.

Weitere, vorteilhafte Weiterbildungen und Ausgestaltungen der Erfindung sind in der nachfolgenden Beschreibung von in der dazugehörigen Zeichnung dargestellten Ausführungsbeispielen angegeben.

### Zeichnung

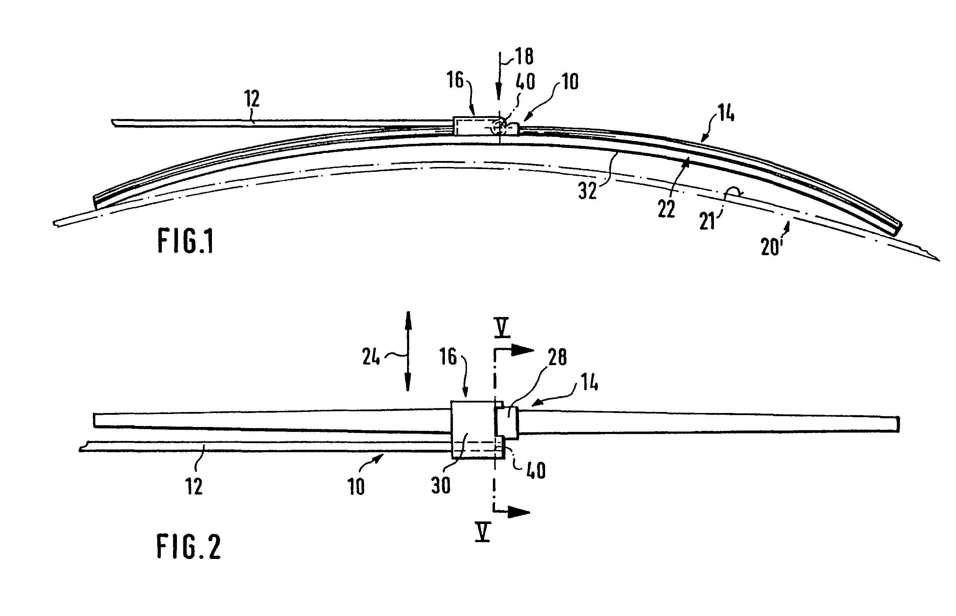

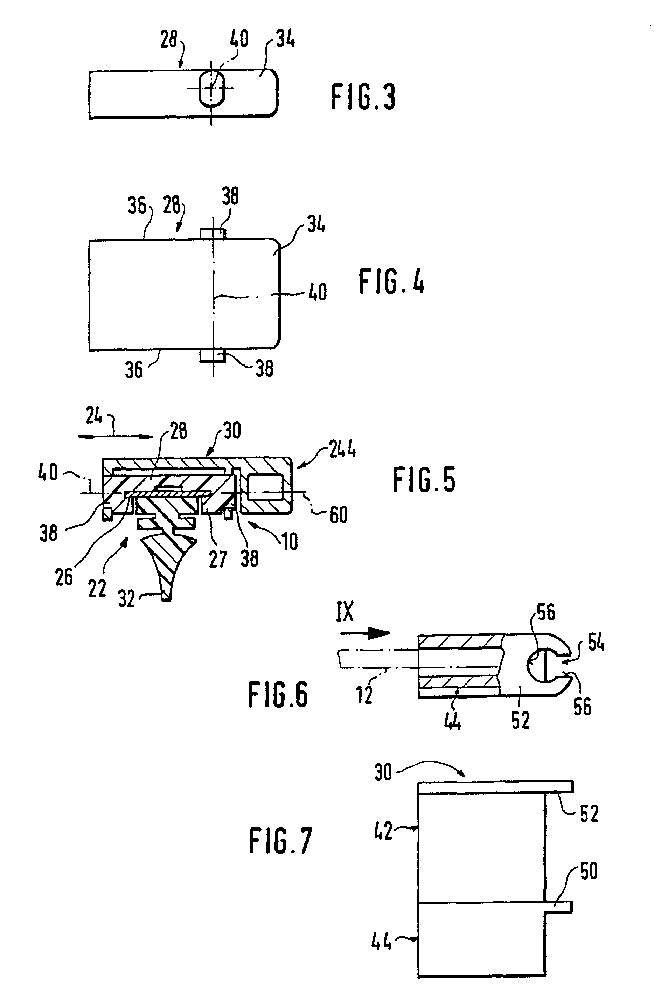

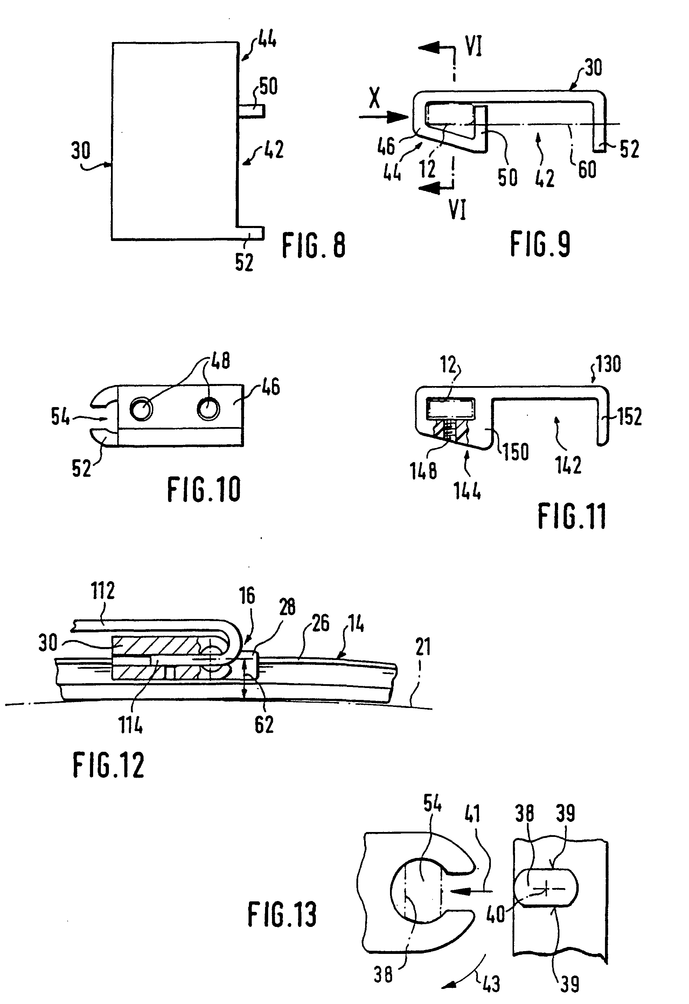

In der Zeichnung zeigen: Figur 1 eine Seitenansicht einer erfindungsgemäßen, ein Wischblatt und einen Wischerarm aufweisenden Wischvorrichtung, Figur 2 eine Draufsicht auf die Wischvorrichtung gemäß Figur 1, Figur 3 eine Seitenansicht der einen, dem Wischblatt zugeordneten Hälfte einer zur Wischvorrichtung gehörenden Vorrichtung zum Anschließen des Wischblatts am Wischerarm, in vergrößerter Darstellung, Figur 4 eine Draufsicht auf die Vorrichtungshälfte gemäß Figur 3, Figur 5 einen Schnitt entlang der Linie V-V durch die Wischvorrichtung gemäß Figur 3, in vergrößerter Darstellung, um 90° gedreht, Figur 6 eine teilweise geschnittene Seitenansicht der anderen, dem Wischerarm zugeordneten Hälfte der zur Wischvorrichtung gehörenden Vorrichtung zum Anschließen des Wischblatts am Wischerarm, in vergrößerter Darstellung, Figur 7 eine Ansicht der Vorrichtungshälfte gemäß Figur 6 von unten, Figur 8 eine Draufsicht auf die Vorrichtungshälfte gemäß Figur 6, Figur 9 eine Ansicht der Vorrichtungshälfte gemäß Figur 6 in Richtung des Pfeiles IX gesehen, Figur 10 eine Ansicht der Vorrichtungshälfte gemäß Figur 6 in Richtung des Pfeiles X in Figur 9 gesehen, Figur 11 eine Ansicht gemäß Figur 9 einer anders ausgeführten Vorrichtungshälfte, Figur 12 eine partiell geschnittene Teildarstellung der Wischvorrichtung, bei der das freie Ende des Wischerarms hakenförmig gekrümmt ist und Figur 13 die Anordnung der beiden auf die Gelenkverbindung reduzierten Vorrichtungshälften gemäß den Figuren 3 und 6, in einer Position vor dem Anschließen des Wischblatts am Wischerarm.

### Beschreibung der Ausführungsbeispiele

Zu einer in Figur 1 teilweise dargestellten Wischvorrichtung 10 für Windschutzscheiben von Kraftfahrzeugen gehören ein an einer Kraftfahrzeugkarosserie geführter, angetriebener Wischerarm 12, an dessem freien Ende ein Wischblatt 14 angelenkt ist. Die gelenkige Verbindung zwischen dem Wischerarm 12 und dem Wischblatt 14 wird durch eine Anschlußvorrichtung 16 bewerkstelligt. Der Wischerarm 12 und damit auch das Wischblatt 14 sind in Richtung des Pfeiles 18 zur in Figur 1 strichpunktiert angedeuteten Scheibe 20 eines Kraftfahrzeuges belastet, an welcher eine zum Wischblatt 14 gehörende, langgestreckte, gummielastische Wischleiste 22 anliegt. In dieser Betriebsposition wird das Wischblatt in Richtung des Doppelpfeiles 24 über die Scheibe verschoben, um deren Oberfläche zu reinigen. Das Wischblatt 14 ist jedoch in Figur 1 in einer Position dargestellt, in der lediglich seine beiden Enden die Scheibe 20 berühren. Die Wischleiste 22 des Wischblatts 14 ist längsachsenparallel an der einen, der Scheibe zugewandten Bandseite eines Tragelements 26 angeordnet. An der anderen, von der Scheibe abgewandten Bandseite des Tragelements 26 ist an dessen Mittelabschnitt ein zur Anschlußvorrichtung 16 gehörendes, wischblattseitiges Vorrichtungsteil 28 befestigt. Ein anderes, wischerarmseitiges Vorrichtungsteil 30 ist fest mit dem freien Ende des Wischerarms 12 verbunden. Wie aus Figur 1 zu entnehmen ist, ist das Wischblatt in seiner in Figur 1 dargestellen Position, in welches es noch nicht über seine gesamte Länge an der Scheibe 20 angelegt ist, stärker gekrümmt als die Scheibe 26. Da in Figur 1 die stärkste Krümmung der Scheibenoberfläche dargestellt ist, ist klar ersichtlich, daß die Krümmung des mit seinen beiden Enden an der Scheibe 20 anliegenden Wischblatts 14 stärker ist als die maximale Scheibenkrümmung. Unter dem Anpreßdruck (Pfeil 18) legt sich das Wischblatt mit seiner Wischlippe 32 über deren gesamten Länge an der Scheibe an. Dabei baut sich im federelastischen Tragelement 26 eine Spannung auf, welche für eine ordnungsgemäße Anlage der Wischleiste bzw. der Wischlippe über deren gesamte Länge an der Scheibe 20 sorgt. Im vorliegenden Zusammenhang ist auch die Heckscheibe von Kraftfahrzeugen als Windschutzscheibe anzusehen, weil wegen der dort auftretenden vielschichtigen Verwirbelungen ebenfalls erhebliche Probleme entstehen können. Im folgenden soll die Verbindung zwischen dem Wischblatt 14 und dem Wischerarm 12 anhand der Figuren 3 bis 8 und 13 näher erläutert werden.

Das in den Figuren 3 und 4 dargestellte, wischblattseitige erste Vorrichtungsteil 28 weist einen Grundkörper 34 auf, der beim Ausführungsbeispiel im wesentlichen quaderförmig ausgebildet ist. An seinen beiden einander gegenüberliegenden, während des Betriebs der Wischvorrichtung in Wischrichtung (Doppelpfeil 24) weisenden Seitenflächen 36 ist jeweils ein aus der jeweiligen Seitenfläche vorspringender Zapfen 38 angeordnet. Die Längsachsen der beiden Zapfen 38 fluchten miteinander und bilden eine Gelenkachse, um die das Wischblatt 14 gegenüber dem Wischerarm 12 um einen gewissen Winkelbetrag in oder gegen die Richtung des Pfeils 43 (Figur 13) schwenken kann. Die beiden Zapfen 38 stellen gewissermaßen die beiden freien Enden eines in den Grundkörper 34 integrierten Gelenkbolzens dar. Diese gemeinsame Längsachse ist in Figur 4 mit der Bezugszahl 40 versehen worden. Wie insbesondere aus Figur 2 ersichtlich ist, erstreckt sich die Längsachse 40 im wesentlichen in Wischrichtung 24.

Eine erste Ausführungsform des anderen, wischerarmseitigen, zweiten Vorrichtungsteils 30 ist in den Figuren 7 bis 10 dargestellt. Wie insbesondere Figur 9 zeigt, ist das Vorrichtungsteil 30 aus einem Blech geformt. Im Querschnitt (Figur 9) gesehen hat es einen ersten U-förmigen Querschnitt 42 und einen zweiten an diesen sich anschließenden rohrförmigen Abschnitt 44. Der rohrförmige Abschnitt 44 bildet eine Halterung und dient als Einsteckkanal zur Aufnahme des freien Endes des Wischerarms 12, der in den Figuren 6 und 9 mit strichpunktierten Linien eingezeichnet ist. Die notwendige feste Verbindung zwischen Wischerarm und dem Vorrichtungsteil 30 kann auf mannigfache Art und Weise bewerkstelligt werden. Beim Ausführungsbeispiel sind dazu in einem Wandbereich 46 des rohrförmigen Abschnitts 44 Gewindebohrungen 48 angeordnet, welche zur Aufnahme von nicht dargestellten Klemmschrauben führen, die zur Befestigung und Sicherung des Vorrichtungsteils 30 am Ende des Wischerarms 12 dienen. Der andere, U-förmige Abschnitt 42 des Vorrichtungsteil 30 ist so auf das andere Vorrichtungsteils 28 abgestimmt, daß seine beiden U-Schenkel 50 und 52 die voneinander abgewandten Seitenflächen 36 des ersten Vorrichtungsteils 28 übergreifen. In jeden der beiden U-Schenkel 50 und 52 ist eine Lageraufnahme 54 für jeweils einen der am Vorrichtungsteil 28 vorhandenen Zapfen 38 angeordnet. Die Ausbildung der Lageraufnahmen 54 ist besonders der Figur 6 zu entnehmen. Sie weisen eine Lagerbohrung 56 auf, die über einen in Längsrichtung des Wischerarms 12 weisenden Schlitz 58 randoffen ist. Die Breite des Schlitzes 56 ist etwas geringer als der Durchmesser der Bohrung 56, welche auf den Durchmesser der Zapfen 38 des ersten Vorrichtungsteils 28 abgestimmt ist. Die Bohrungsachsen der beiden Lagerbohrung 56 fluchten miteinander, was in Figur 9 durch die strichpunktierte Linie 60 dokumentiert ist.

Eine andere Ausführungsform des zweiten, wischerarmseitigen Vorrichtungsteils 130 zeigt Figur 11. Dieses Vorrichtungsteil ist aus einem Kunststoff hergestellt. Es hat aber im Prinzip den gleichen Aufbau wie das Vorrichtungsteil 30 gemäß den Figuren 7 bis 10. So hat es - im Querschnitt gesehen - ebenfalls einen U-förmigen Abschnitt 142 und einen im wesentlichen rohrförmigen Abschnitt 144. Der rohrförmige Abschnitt 144 bildet eine Halterung und dient ebenfalls zur Aufnahme des freien Endes des Wischerarmes 12, der in Figur 11 strichpunktiert eingezeichnet ist. Wenigstens eine Gewindebohrung 148 in der Wand des rohrförmigen Abschnitts dient zur Befestigung und Sicherung des Vorrichtungsteils 130 am freien Ende des Wischerarms 12 mit Hilfe einer nicht dargestellten Klemmschraube. Der rohrförmige Abschnitt 144 bildet also gewissermaßen eine Halterung für das Vorrichtungsteil 130 am Wischerarm 12. Im übrigen entspricht die Ausbildung des Vorrichtungsteils 130 der Ausbildung des Vorrichtungsteils 30 gemäß den Figuren 7 bis 10. Dies betrifft insbesondere die Anordnung von Lageraufnahmen in den U-Schenkeln 150 und 152.

Die Schnittdarstellung gemäß Figur 5 zeigt einen Schnitt durch die Wischvorrichtung entlang der Linie V-V in Figur 2. Dabei ist jedoch der als Halterung für den Wischerarm 12 zu bezeichnende rohrförmige Abschnitt 244 nur in einer prinzipiellen Ausgestaltung gezeichnet; also ohne einen Bezug zu den Ausführungsformen gemäß den Figuren 7 und 9. Aus Figur 5 ist ersichtlich, daß das wischblattseitige Vorrichtungsteil 28 der Wischvorrichtung 10 auf der von der Scheibe abgewandten Seite des bandartig langgestreckten Tragelements 26 angeordnet ist. Es untergreift dieses Tragelement lediglich mit hakenförmigen Fortsätzen 27 um eine ordnungsgemäße Befestigung am Tragelement zu erhalten. Weiter zeigt Figur 5, daß an der der Scheibe zugewandten unteren Seite des Tragelements 26 die Wischleiste 32 angeordnet ist. Weiter ist aus dieser Figur klar ersichtlich, daß die Gelenkzapfen 38 des Vorrichtungsteils 28 in den Lageraufnahmen 54 des zweiten, wischerarmseitigen Vorrichtungsteils 30 liegen. Insbesondere die Figuren 2, 5, 9 und 11 bringen unmißverständlich zum Ausdruck, daß die rohrförmige Halterung 44 bzw. 144 bzw. 244 in Wischrichtung (Pfeil 24) gesehen, neben dem U-förmigen Abschnitt 42 bzw. 142 liegt. Gemäß Figur 5 quert die gemeinsame Gelenk- oder Längsachse 40 die rohrförmige Lageraufnahme 144. Im Zusammenbau fluchtet die Längsachse 60 der Lageraufnahmen 54 mit der gemeinsamen Längsachse der Zapfen 40. Daraus ergibt sich, daß in Draufsicht auf die Wischvorrichtung gemäß Figur 2 gesehen das Wischblatt 14 neben dem Wischerarm 12 angeordnet und über die die Vorrichtungsteile 28 und 30 beinhaltende Anschlußvorrichtung 16 mit diesem gelenkig verbunden ist. Die gelenkige Verbindung zwischen dem Wischerarm und dem Wischblatt ist notwendig, damit sich das Wischblatt in allen möglichen Arbeitspositionen der sphärisch, aber nicht kugelförmig gekrümmten Oberfläche der Scheibe anpassen kann.

Abweichend von den Ausführungsformen gemäß den Figuren 1 und 2 der Wischvorrichtung 10 ist es nicht zwingend notwendig, daß das freie Wischerarmende gestreckt ausgeführt ist. Es ist ohne weiteres auch denkbar den freien Hakenschenkel 114 eines sogenannten Hakenwischerarms 112 einzuführen und diesen dort festzulegen. Weiter zeigt Figur 12, daß bei an der zu wischenden Oberfläche 21 der Scheibe die Gelenkachse 40, 60 mit einem Abstand 62 vor der Scheibe befindet. Dies gilt selbstverständlich für alle hier angegebenen Ausführungsformen der Erfindung.

Anhand von Figur 13 soll nun noch die Montage des mit dem Vorrichtungsteil 28 versehenen Wischblatts 14 am mit dem Vorrichtungsteil 30 versehenen Wischerarm 12 geschildert werden. Damit die Zapfen 38 in ihre Lageraufnahmen 54 gelangen können, sind diese miteinander gegenüberliegenden Anflachungen 39 versehen, deren Abstand voneinander auf die Breite des Schlitzes 56 der Lageraufnahmen 54 abgestimmt. Während der Schlitz 56 sich etwa parallel zur Oberfläche der Scheibe erstreckt sind die Anflachungen 39 in einer auf der Scheibe stehenden Ebene ausgerichtet. Zum Anschließen des Wischblatts am Wischerarm wird dieser von der Scheibe weggeklappt und das Wischblatt zum Wischerarm die in Figur 13 dargestellte Position gebracht. Danach wird das Wischblatt in Richtung des Pfeiles 41 verschoben, wobei die beiden Zapfen 38 in ihre Lageraufnahmen 54 gelangen. Durch Drehen des Wischblatts in Richtung des Pfeiles 43 gelangen die Zapfen 38 in die in Figur 13 innerhalb der Lageraufnahme 54 strichpunktiert dargestellte Betriebsposition in welcher sie nicht aus ihren Lageraufnahmen 54 entfernt werden können.

Somit ist eindeutig dargelegt, daß durch die Erfindung eine besonders niedrige Bauhöhe der Wischvorrichtung ermöglicht wird, weil der Wischerarm 12 in Wischrichtung (Pfeil 24) nebem dem Wischblatt angeordnet werden kann. Dies ist besonders bei einem gattungemäßen Wischblatt realisierbar, das durch seinen Aufbau - separates, bandartig langgestrecktes und federelastisches Tragelement, an dessen der Scheibe zugewandten Bandfläche die Wischleiste angeordnet ist - schon eine relativ niedrige Ausgangsbauhöhe ermöglicht.

## Patentansprüche

1. Wischvorrichtung (10) für Windschutzscheiben von Kraftfahrzeugen mit einem angetriebenen Wischerarm (12), an dessen freien Ende ein mit einer langgestreckten, gummielastischen Wischleiste (32) versehenes, an der Scheibe (20) anlegbares Wischblatt (14) gelenkig angeschlossen ist, wobei die sich wenigstens annähernd in Wischrichtung (24) des Wischblatts erstreckende Gelenkachse (40, 60) mit Abstand von der Scheibe befindet und die Wischleiste längsachsenparallel an einem bandartig langgestreckten federelastischen Tragelement (26) gehalten ist, an dessen Mittelabschnitt die eine Hälfte (28) einer Anschlußvorrichtung (16) für den mit der anderen Vorrichtungshälfte (30) versehenen Wischerarm (12) befestigt ist, wobei das Wischblatt (14) senkrecht zur Scheibe (20) gesehen neben dem Wischerarm (12) angeordnet und über die Anschlußvorrichtung (16) mit diesem gelenkig verbunden ist und eine der beiden Vorrichtungshälften (28 bzw. 30) einen Gelenkbolzen (38) aufweist und die andere der beiden Vorrichtungshälften (30 bzw. 28) mit einer dem Gelenkbolzen (38) zugeordneten Lageraufnahme (54) versehen ist, **dadurch gekennzeichnet, daß** die den Gelenkbolzen (38) aufweisende Vorrichtungshälfte (28) einen Grundkörper (34) aufweist an dessen beiden voneinander abgewandten, quer zur Wischrichtung (24) liegenden Seiten (36) je ein in Wischrichtung vorspringender Zapfen (38) angeordnet ist und daß die beiden Zapfen eine miteinander fluchtende Längsachse (40) haben.

2. Wischvorrichtung nach Anspruch 1, **dadurch gekennzeichnet, daß** der Gelenkbolzen (38) am Wischblatt (14) angeordnet ist und sich dessen Lageraufnahme (54) am Wischerarm (12) befindet.

3. Wischvorrichtung nach einem der Ansprüche 1 oder 2, **dadurch gekennzeichnet, daß** die beiden Vorrichtungshälften (28, 30) mit Mitteln (36 bzw. 50, 52) zum axialen Sichern des Gelenkbolzens (38) in seiner Lageraufnahme (54) versehen ist.

4. Wischvorrichtung nach einem der Ansprüche 1 bis 3, **dadurch gekennzeichnet, daß** die die Lageraufnahme (50). aufweisende Vorrichtungshälfte (30) einen U-förmigen Querschnitt hat, dessen beiden U-Schenkel (50, 52) die beiden mit den Zapfen (38) versehenen Seiten (36) des Grundkörpers (34) übergreifen und daß in jedem der beiden U-Schenkel (50, 52) eine Lageraufnahme (54) für den an der von ihm übergriffenen Seite des Grundkörpers (36) angeordneten Zapfen (38) angeordnet ist.

5. Wischvorrichtung nach den Ansprüchen 2 und 4, **dadurch gekennzeichnet, daß** jeder U-Schenkel (50, 52) mit einer Halterung (44 bzw. 144 bzw. 244) für das freie Ende des Wischerarms (12) versehen ist.

6. Wischvorrichtung nach Anspruch 5, **dadurch gekennzeichnet, daß** die Halterung einen Einsteckkanal für das freie Ende des Wischerarms (12) hat und mit Sicherungsmitteln für das Wischerarmende im Einsteckkanal versehen ist.

7. Wischvorrichtung nach einem der Ansprüche 5 oder 6, **dadurch gekennzeichnet, daß** die Halterung (44 bzw. 144 bzw. 244) für das freie Ende des Wischerarms (12) in Wischvorrichtung (Doppelpfeil 24) gesehen neben dem Wischblatt (14) angeordnet ist.

8. Wischvorrichtung nach einem der Ansprüche 5 bis 7, **dadurch gekennzeichnet, daß** die die Lageraufnahme (54) aufweisende Vorrichtungshälfte (30) aus Kunststoff hergestellt ist.

9. Wischvorrichtung nach einem der Ansprüche 5 bis 8, **dadurch gekennzeichnet, daß** die die Lageraufnahme aufweisende Vorrichtungshälfte (30) aus Metall hergestellt, vorzugsweise aus einem Blech geformt ist.

## Claims

1. Wiper device (10) for windscreens of motor vehicles, having a driven wiper arm (12), to the free end of which a wiper blade (14), which is provided with an elongate, rubber-elastic wiper strip (32) and can be placed against the window (20), is connected in a hinged manner, the hinge axis (40, 60), which extends at least approximately in the wiping direction (24) of the wiper blade, being situated at a distance from the window and the wiper strip being held parallel to the longitudinal axis on a resilient supporting element (26) which is elongate in the manner of a band and to whose central section is fastened the one half (28) of a connecting device (16) for the wiper arm (12) provided with the other device half (30), the wiper blade (14) being arranged next to the wiper arm (12), as seen perpendicular with respect to the window (20), and being connected in a hinged manner to the latter via the connecting device (16), and one of the two device halves (28 or 30) having a hinge pin (38) and the other of the two device halves (30 or 28) being provided with a bearing socket (54) assigned to the hinge pin (38), **characterized in that** the device half (28) which has the hinge pin (38) has a main body (34) with a respective pin (38) projecting in the wiping direction being arranged on its two sides (36) which face away from each other and lie transversely with respect to the wiping direction (24), and **in that** the two pins have an aligned longitudinal axis (40).

2. Wiper device according to Claim 1, **characterized in that** the hinge pin (38) is arranged on the wiper blade (14) and its bearing socket (54) is situated on the wiper arm (12).

3. Wiper device according to either of Claims 1 and 2, **characterized in that** the two device halves (28, 30) are provided with means (36 or 50, 52) for axially securing the hinge pin (38) in its bearing socket (54).

4. Wiper device according to one of Claims 1 to 3, **characterized in that** the device half (30) having the bearing socket (50) has a U-shaped cross section, the two U-limbs (50, 52) of which engage over the two sides (36) of the main body (34) that are provided with the pins (38), and **in that** a bearing socket (54) is arranged in each of the two U-limbs (50, 52) and is intended for the pin (38) arranged on that side of the main body (36) which it engages over.

5. Wiper device according to Claims 2 and 4, **characterized in that** each U-limb (50, 52) is provided with a holder (44 or 144 or 244) for the free end of the wiper arm (12).

6. Wiper device according to Claim 5, **characterized in that** the holder has a plug-in channel for the free end of the wiper arm (12) and is provided with securing means in the plug-in channel for the end of the wiper arm.

7. Wiper device according to either of Claims 5 and 6, **characterized in that** the holder (44 or 144 or 244) for the free end of the wiper arm (12) is arranged next to the wiper blade (14), as seen in the wiping direction (double arrow 24).

8. Wiper device according to one of Claims 5 to 7, **characterized in that** the device half (30) which has the bearing socket (54) is produced from plastic.

9. Wiper device according to one of Claims 5 to 8, **characterized in that** the device half (30) which has the bearing socket is produced from metal and is preferably formed from sheet metal.

## Revendications

1. Dispositif d'essuie-glace (10) pour pare-brise de véhicules, dans lequel :
- un bras d'essuie-glace (12) entraîné, à son extrémité libre est raccordé avec articulation à une lame d'essuyage (14) équipée d'un balai d'essuyage (32) allongé, élastique comme du caoutchouc, qui peut être appliqué sur la vitre (20),
- l'axe d'articulation (40, 60), situé au moins à proximité selon la direction d'essuyage (24) de la lame d'essuyage (14), se trouve à une certaine distance de la vitre et le balai d'essuyage est maintenu sur un élément porteur (26) élastique et allongé en forme de bande, avec son axe longitudinal parallèle à celui de l'élément,
- vers le milieu de l'élément porteur, est fixée sur celui-ci une moitié (28) d'un dispositif de raccordement (16) au bras d'essuie-glace (12), lui-même équipé de la seconde moitié de dispositif (30),
- la lame d'essuyage (14), observée perpendiculairement à la vitre (20) se trouve à côté du bras d'essuie-glace (12) auquel elle est reliée avec articulation par le dispositif de raccordement (16),
- une des deux moitiés de dispositif (28 ou 30) présente un axe d'articulation (38) tandis que l'autre moitié (30 ou 28) est équipée d'un logement de palier (54) associé à cet axe (38),
**caractérisé en ce que**
la moitié de dispositif (28) possédant l'axe d'articulation (38) présente un corps de base (34) portant, sur chacune de ses deux faces latérales (36) éloignées l'une de l'autre et perpendiculaires à la direction d'essuyage (24), un tourillon (38) faisant saillie selon la direction d'essuyage, les deux tourillons ayant un même axe longitudinal (40).

2. Dispositif d'essuie-glace selon la revendication 1,
**caractérisé en ce que**
l'axe d'articulation (38) est porté par la lame d'essuyage (14) et se trouve dans le logement de palier (54) correspondant porté par le bras d'essuie-glace (12).

3. Dispositif selon l'une quelconque des revendications 1 ou 2,
**caractérisé en ce que**
les deux moitiés de dispositif (28, 30) à sont équipées de moyens (36 ou 50, 52) pour garantir axialement l'axe d'articulation (38) dans son logement de palier (54).

4. Dispositif selon l'une quelconque des revendications 1 à 3,
**caractérisé en ce que**
la moitié de dispositif(30) présentant le logement de palier (50) a une section en forme d'U dont les deux branches (50, 52) sont en prise avec les deux côtés (36) du corps de base (34) portant les tourillons (38) et dans chaque branche (50, 52) se trouve un logement de palier (54) pour accueillir le tourillon (38) situé sur le côté correspondant du corps de base (36).

5. Dispositif selon l'une quelconque des revendications 2 et 4,
**caractérisé en ce que**
chaque branche de l'U (50, 52) est équipée d'un support (44 ou 144 ou 244) pour l'extrémité libre du bras d'essuyage (12).

6. Dispositif selon la revendication 5,
**caractérisé en ce que**
le support a un canal d'emmanchement pour accueillir l'extrémité libre du bras d'essuie-glace (12) et est doté de moyens pour sécuriser cette extrémité dans le canal.

7. Dispositif selon l'une quelconque des revendications 5 ou 6,
**caractérisé en ce que**
le support (44 ou 144 ou 244) destiné à l'extrémité libre du bras d'essuie-glace (12) se trouve, quand on l'observe selon la direction d'essuyage (double flèche 24), à côté de la lame d'essuyage (14).

8. Dispositif selon l'une quelconque des revendications 5 à 7,
**caractérisé en ce que**
la moitié de dispositif (30) présentant le logement de palier (54) est fabriquée en matière plastique.

9. Dispositif selon l'une quelconque des revendications 5 à 8,
**caractérisé en ce que**
la moitié de dispositif (30) présentant le logement de palier (54) est fabriquée en métal, de préférence par formage d'une tôle.
